# EUROPÄISCHE PATENTSCHRIFT

(11) **EP 3 784 362 B1**
(45) Veröffentlichungstag und Bekanntmachung des Hinweises auf die Patenterteilung: **02.08.2023**
(21) Anmeldenummer: 19706862.0
(22) Anmeldetag: 12.02.2019
(51) Int. Cl.: B01D 25/164, B01D 25/172

(54) **FILTERPRESSE SOWIE VERFAHREN ZUM BETREIBEN EINER FILTERPRESSE**
FILTER PRESS AND METHOD FOR OPERATING A FILTER PRESS
PRESSE À FILTRES ET PROCÉDÉ DESTINÉ À FAIRE FONCTIONNER UNE PRESSE À FILTRES

(30) Priorität: 27.04.2018 AT 503592018
(43) Veröffentlichungstag der Anmeldung: 03.03.2021
(73) Patentinhaber: ANDRITZ Technology and Asset Management GmbH, 8045 Graz (AT)
(72) Erfinder: GIESEN, Detlef, 42109 Wuppertal (DE); PANHOLZER, Michael, 4100 Ottensheim (AT)
(74) Vertreter: Wirnsberger & Lerchbaum Patentanwälte OG
(86) Internationale Anmeldenummer: PCT/AT2019/060053
(87) Internationale Veröffentlichungsnummer: WO 2019/204838

(56) Entgegenhaltungen:
- EP-A1- 2 452 736
- WO-A2-2015/127366
- CN-A- 1 471 992
- CN-B- 104 689 615

## Beschreibung

Die Erfindung betrifft eine Filterpresse nach Anspruch 1, aufweisend ein mehrere Filterplatten enthaltendes Plattenpaket mit zwischen den Filterplatten angeordneten Filterkammern, wobei die Filterplatten relativ zueinander verschiebbar positioniert sind, um die Filterkammern bei Bedarf entleeren zu können.

Weiter betrifft die Erfindung ein Verfahren nach Anspruch 10 zum Betreiben einer Filterpresse mit einem mehrere Filterplatten aufweisenden Plattenpaket mit zwischen den Filterplatten angeordneten Filterkammern.

Aus dem Stand der Technik sind Filterpressen der eingangs genannten Art sowie Verfahren zum Betreiben derselben bekannt geworden, um beispielsweise Suspensionen in feste und flüssige Bestandteile zu trennen. Hierzu ist das die Filterplatten aufweisende Plattenpaket üblicherweise zwischen einem festen Kopfstück und einer beweglichen Druckplatte angeordnet. Zwischen den einzelnen Filterplatten befinden sich in der Regel Filtermittel wie Gewebe, beispielsweise Tücher, oder Membrane, durch welche die festen Teile der Suspensionen von den flüssigen Teilen der Suspension getrennt werden. Bei einem Betrieb wird mit der bewegbaren Druckplatte ein Druck auf das Plattenpaket ausgeübt, sodass die Dichtheit des Plattenpaketes gewährleistet ist, wonach die Suspension in das Plattenpaket eingeleitet wird, üblicherweise durch eine mittig im Plattenpaket angeordnete Durchlassöffnung. Unter Druck wird die Suspension dann gegen die Filtermittel gepumpt, wodurch feste Teile der Suspension an Filtermitteln bzw. in den Filterkammern zurückbleiben und dort einen Filterkuchen bilden, während flüssige Teile der Suspension die Filtermittel passieren und die Filterpresse über Ablaufkanäle verlassen.

Um den Filterkuchen aus den Filterkammern zu entfernen, wird das Plattenpaket geöffnet, wobei die Filterplatten derart relativ zueinander bewegt werden, dass zwischen den Filterplatten ein Abstand bzw. Freiraum gebildet wird, sodass in den Filterkammern befindliche Filterkuchen durch Schwerkraft aus den Filterkammern ausgetragen werden können.

So offenbart das Dokument WO 2015/127366 A2 eine Filterpresse mit bewegbaren Filterkammern.

Weiter sind aus den Dokumenten EP 2 452 736 A1, CN 104689615 B und CN 1471992 A Filterpressen bekannt geworden, bei welchen ein Teilpaket mittels einer Trenneinrichtung von einem weiteren Teilpaket trennbar ist.

Üblicherweise weist ein Plattenpaket eine Vielzahl von Filterplatten auf, welche sequenziell geleert werden, indem die jeweils letzte Filterkammer, in welcher noch ein Filterkuchen enthalten ist, geöffnet wird, bis zuletzt die dem Kopfstück nächstgelegene Filterkammer geleert wird. Eine Dauer, innerhalb welcher ein Filterkuchen aus einer Filterkammer mittels Schwerkraft entfernt wird, kann beispielsweise etwa 2,5 Sekunden betragen. Bei einer üblichen Filterpresse mit 180 Filterplatten führt dies zu einer Kuchenaustragszeit von 450 Sekunden, sodass eine entsprechende Anlage eine beträchtliche Zeit in einem Betriebszustand betrieben wird, in welchem Filterkuchen ausgetragen werden, und somit in dieser Zeit nicht zur Trennung einer Suspension zur Verfügung steht.

Hier setzt die Erfindung an. Aufgabe der Erfindung ist es, eine Filterpresse der eingangs genannten Art anzugeben, welche auf besonders effiziente Weise betreibbar ist.

Ferner soll ein Verfahren der eingangs genannten Art angegeben werden, welches besonders effizient ist.

Die erste Aufgabe wird erfindungsgemäß durch eine Filterpresse der eingangs genannten Art gelöst, bei welcher zumindest eine Trenneinrichtung vorgesehen ist, mit welcher ein Teilpaket des Plattenpaketes relativ zu einem weiteren Teilpaket des Plattenpaketes verschiebbar ist, und wobei zum Entleeren der Filterkammern eine Plattentransportkette vorgesehen ist, um die Filterplatten entlang einer Transportrichtung zu bewegen, wobei ein mit der Plattentransportkette bewegbar verbundener Mitnehmer vorgesehen ist, welcher formschlüssig mit den Filterplatten verbindbar ist, um die Plattentransportkette lösbar mit den Filterplatten zu verbinden, wobei die Filterpresse zur gleichzeitigen Öffnung von zumindest zwei in unterschiedlichen Teilpaketen angeordneten Filterkammern geeignet ist, um in den einzelnen Teilpaketen ein gleichzeitiges Entleeren von Filterkammern und/oder ein gleichzeitiges Tauschen von Filtermitteln zu ermöglichen.

Im Rahmen der Erfindung wurde erkannt, dass eine Effizienz beim Entleeren der Filterpresse auf einfache Weise vervielfacht werden kann, wenn die einzelnen Filterkammern nicht sequenziell bzw. nacheinander, sondern zumindest teilweise gleichzeitig entleert werden. Konstruktiv kann dies auf besonders einfache und darüber hinaus robuste Weise umgesetzt werden, wenn eine Trenneinrichtung vorgesehen ist, mit welcher ein Teilpaket relativ zu einem weiteren Teilpaket verschiebbar ist. Die einzelnen Teilpakete können dann auf herkömmliche Weise entleert werden, beispielsweise indem Kammern der einzelnen Teilpakete sequenziell entleert werden. Es versteht sich, dass je nach Größe des Plattenpaketes auch mehrere Trenneinrichtungen vorgesehen sein können, um das Plattenpaket in mehrere Teilpakete zu teilen.

Bevorzugt ist vorgesehen, dass die Trenneinrichtung als Schiebeplatte ausgebildet ist. Dadurch wird eine gleichzeitig einfache und robuste Konstruktion erreicht, mit welcher Teilpakete von weiteren Teilpaketen mit einer Druckkraft weggeschoben werden können.

Es hat sich bewährt, dass die Schiebeplatte hydraulisch bewegbar ist, beispielsweise können hierzu ein oder mehrere Hydraulikzylinder vorgesehen sein, mit welchen die Schiebeplatte bewegt wird, um das Plattenpaket in mehrere Teilpakete zu trennen, welche anschließend gleichzeitig entleert werden.

Es hat sich gezeigt, dass eine besonders hohe Effizienz bei gleichzeitig einfachem Aufbau der Filterpresse erreicht wird, wenn zumindest zwei Trenneinrichtungen vorgesehen sind, um das Plattenpaket in zumindest drei Teilpakete zu teilen.

Üblicherweise ist die Filterpresse zur Erreichung einer besonders hohen Effizienz derart ausgebildet, dass mehrere Filterkammern eines Teilpaketes des Plattenpaketes gleichzeitig entleerbar sind. Beispielsweise können dann in den einzelnen Teilpaketen jeweils Sektionen geöffnet werden, wobei eine Sektion mehrere Filterkammern umfasst, um ein Entleeren besonders rasch durchführen zu können.

Günstig ist es, wenn Führungseinrichtungen vorgesehen sind, an welchen die zumindest eine Trenneinrichtung und/oder die Filterplatten verschiebbar gelagert sind. Eine Verschiebbarkeit der Filterplatten kann auf einfache Weise erreicht werden, wenn die Filterplatten relativ zueinander in nur einer Richtung translatorisch bewegbar sind, welche in aller Regel parallel zu einer Bewegungsrichtung der Druckplatte ist. Die Führungseinrichtung kann beispielsweise als Führungsschiene ausgebildet sein.

Erfindungsgemäß ist eine Plattentransportkette vorgesehen, um die Filterplatten entlang einer Transportrichtung zu bewegen, wobei ein mit der Plattentransportkette bewegbar verbundener Mitnehmer vorgesehen ist, welcher formschlüssig mit den Filterplatten verbindbar ist, um die Plattentransportkette lösbar mit den Filterplatten zu verbinden. Dadurch können Filterplatten auf besonders einfache und robuste Weise bewegt werden. Üblicherweise ist der Mitnehmer um eine Achse, um welche Kettenglieder der Plattentransportkette drehbar verbunden sind, drehbar mit der Plattentransportkette verbunden.

In der Regel greift der Mitnehmer zum Bewegen der Filterplatten mit der Plattentransportkette an kopfseitig an den Filterplatten angeordneten Gegenstücken formschlüssig ein, um die Filterplatten entlang einer Transportrichtung zu ziehen. Die Transportrichtung ist in der Regel vom fixen Kopfstück zur Druckplatte hin orientiert, sodass das Filterpaket mittels der Plattentransportkette entleerbar ist, indem die einzelnen Filterplatten sequenziell vom Kopfstück weg bewegt werden, wobei zwischen den Filterplatten Freiräume gebildet werden, sodass in den Filterkammern befindlicher Filterkuchen durch die Schwerkraft ausgetragen wird.

Günstig ist es, wenn eine Filterplatte, insbesondere eine erste Filterplatte eines Teilpaketes, eine Hebekufe aufweist, mit welcher der Mitnehmer betätigbar, insbesondere anhebbar, ist, sodass eine mit der Trenneinrichtung bewirkte Bewegung des Teilpaketes relativ zum Mitnehmer in Transportrichtung nicht durch den Mitnehmer blockiert wird. Im Unterschied zu Filterpressen des Standes der Technik ist bei einer erfindungsgemäßen Filterpresse auch eine Bewegung der Filterplatten in Transportrichtung relativ zur Plattentransportkette möglich, weil die Filterplatten neben der Plattentransportkette auch mit der Trenneinrichtung in Transportrichtung bewegbar sind. Durch die Hebekufe wird auf besonders einfache Weise verhindert, dass die Plattentransportkette bzw. der mit diese verbundene Mitnehmer die Bewegung der Trenneinrichtung blockiert. Als erste Filterplatte wird somit jene Filterplatte eines Teilpaketes bezeichnet, welche bei Bewegung des Teilpaketes in Transportrichtung an einem vorderen Ende des Teilpaketes angeordnet ist und als erste den Mitnehmer kontaktiert. Es versteht sich, dass üblicherweise nur an Filterplatten jener Teilpakete Hebekufen angeordnet sind, welche durch die Trenneinrichtung in Transportrichtung bewegbar bzw. schiebbar sind.

Üblicherweise sind zumindest einige Filterplatten über bewegbare Klinken formschlüssig verbindbar. Dadurch kann ein unbeabsichtigtes Lösen der aneinandergepressten Filterplatten bei einem Abfall des mit der Druckplatte aufgebrachten Druckes vermieden werden.

Mit Vorteil ist vorgesehen, dass die zumindest eine Trenneinrichtung eine Sonderklinke aufweist, sodass bei einer Bewegung der Trenneinrichtung in Transportrichtung Filterplatten, welche in Transportrichtung der Trenneinrichtung nachgelagert sind, nicht mit der Trenneinrichtung bewegt werden. Dadurch ist ein Aufteilen des Plattenpaketes auf mehrere Teilpakete mit der Trenneinrichtung auf einfache Weise ermöglicht. Mit der Trenneinrichtung sind demnach Filterplatten nur schiebbar, jedoch nicht ziehbar, da über die Sonderklinke keine Zugkraft übertragbar ist.

Die weitere Aufgabe wird erfindungsgemäß durch ein Verfahren der eingangs genannten Art gelöst, bei welchem eine erfindungsgemäße Filterpresse eingesetzt wird, wobei das Plattenpaket mit einer Trenneinrichtung in zumindest zwei Teilpakete geteilt wird, wonach zumindest zwei in unterschiedlichen Teilpaketen angeordnete Filterkammern gleichzeitig geöffnet werden. Erfindungsgemäß wird das Verfahren mit einer erfindungsgemäßen Filterpresse durchgeführt.

Eine besonders hohe Effizienz wird erreicht, wenn mehrere Filterkammern eines Teilpaketes gleichzeitig geöffnet werden. Beispielsweise können mehrere Filterkammern eines Teilpaketes des Plattenpaketes gleichzeitig entleert werden, welche zu einer Sektion zusammengefasst und gleichzeitig betätigbar sind.

Es versteht sich, dass die Teilpakete neben dem gleichzeitigen Entfernen der Filterkuchen auch für weitere Tätigkeiten genutzt werden können, welche gleichzeitig an den geöffneten Filterplatten möglich sind, beispielsweise zum Waschen oder Tauschen der Filtermittel, welche beispielsweise als Tücher ausgebildet sein können.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 eine erfindungsgemäße Filterpresse in einem geschlossenen Zustand;
Fig. 2 bis 11 eine erfindungsgemäße Filterpresse in verschiedenen geöffneten Betriebszuständen;
Fig. 12 und 13 eine weitere erfindungsgemäße Filterpresse in unterschiedlichen Betriebszuständen;

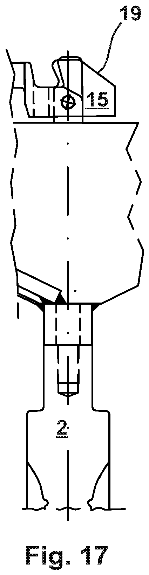

Fig. 14 bis 17 verschiedene Details einer erfindungsgemäßen Filterpresse;
Fig. 18 bis 21 ein Detail einer erfindungsgemäßen Filterpresse in unterschiedlichen Betriebszuständen.

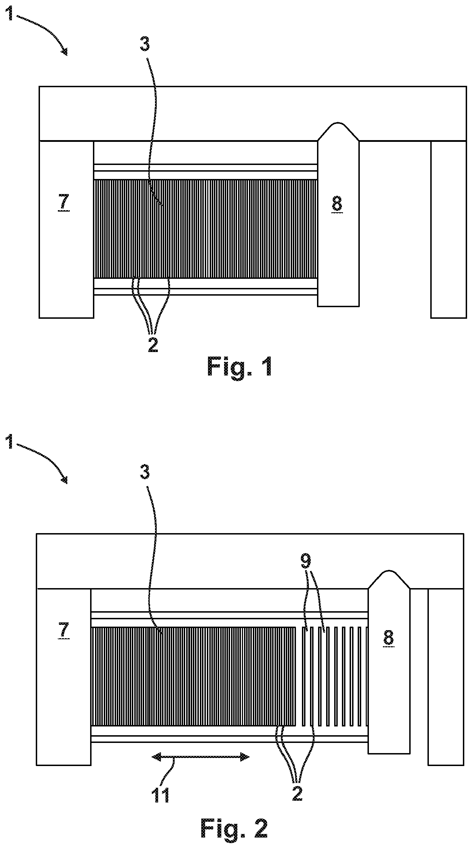

Fig. 1 bis 11 zeigen eine erfindungsgemäße Filterpresse 1 in unterschiedlichen Betriebszuständen. In Fig. 1 ist ein Betriebszustand der Filterpresse 1 dargestellt, in welchem mit der Filterpresse 1 ein Trennen einer zugeführten Suspension in feste und flüssige Bestandteile möglich ist. Hierzu wird mit einer relativ zu einem festen Kopfstück 7 an einem Ende des Plattenpaketes 3 angeordneten beweglichen Druckplatte 8 ein Druck auf das Plattenpaket 3 aufgebracht, sodass eine Dichtheit des Plattenpaketes 3 gewährleistet ist und feste Bestandteile der über nicht dargestellte Zufuhrrohre zugeführten Suspension in zwischen Filterplatten 2 angeordneten Filterkammern des Plattenpaketes 3 verbleiben, während flüssige Bestandteile die Filterpresse 1 über ebenfalls nicht dargestellte Ablaufkanäle verlassen.

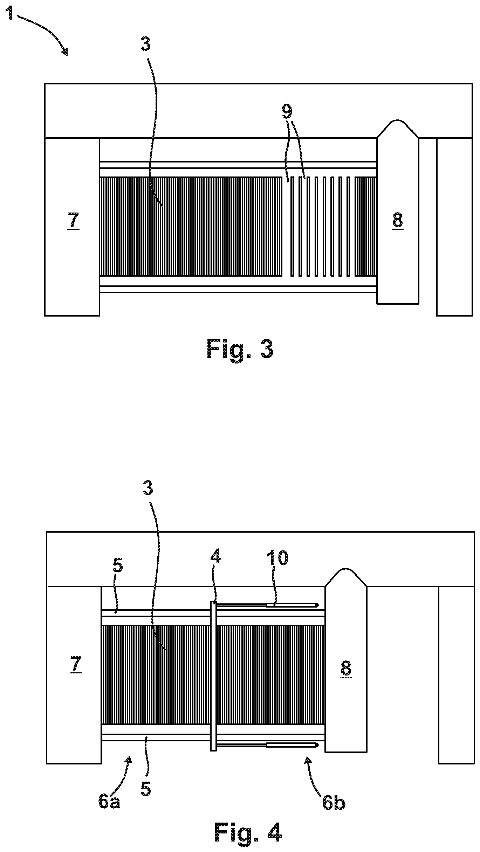

Die Filterplatten 2 sind relativ zueinander in einer Bewegungsrichtung 11 bewegbar angeordnet, sodass die Filterplatten 2 zum Entleeren eines Filterkuchens aus den Filterkammern relativ zueinander derart bewegt werden können, dass ein Freiraum 9 bzw. ein Abstand zwischen den Filterplatten 2 gebildet wird. Der in den Filterkammern zwischen den Filterplatten 2 befindliche Filterkuchen kann dann mittels Schwerkraft aus den Filterkammern ausgetragen werden. Solche Betriebszustände, in denen unterschiedliche Sektionen des Plattenpaketes 3, welche Sektionen jeweils mehrere Filterkammern bzw. Filterplatten 2 umfassen, entleert werden, sind in Fig. 2 und 3 dargestellt.

Um mehrerer Filterkammern des Plattenpaketes 3 gleichzeitig entleeren zu können, ist wie in Fig. 4 dargestellt erfindungsgemäß eine durch eine Schiebeplatte 4 gebildete Trenneinrichtung vorgesehen, mit welcher das Plattenpaket 3 in ein zwischen dem Kopfstück 7 und der Schiebeplatte 4 angeordnetes erstes Teilpaket 6a und ein zwischen der Schiebeplatte 4 und der Druckplatte 8 angeordnetes zweites Teilpaket 6b geteilt werden kann.

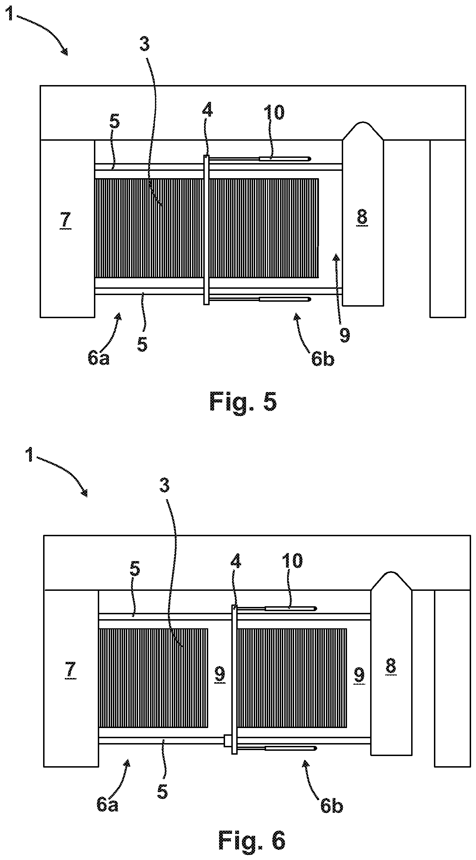

Ein Entleeren der einzelnen Filterkammern kann dann beispielsweise erfolgen, indem zunächst die Druckplatte 8 vom Kopfstück 7 wegbewegt wird, sodass zwischen dem Plattenpaket 3 und der Druckplatte 8 ein Freiraum 9 entsteht, um Filterkammern des Plattenpaketes 3 zu entleeren. Dieser Zustand ist in Fig. 5 dargestellt.

Wie in Fig. 6 dargestellt kann anschließend das zweite Teilpaket 6b des Plattenpaketes 3 mit der Schiebeplatte 4 vom ersten Teilpaket 6a getrennt werden, indem die Schiebeplatte 4 samt dem zweiten Teilpaket 6b des Plattenpaketes 3 vom fixen Kopfstück 7 wegbewegt wird. Hierzu ist die Schiebeplatte 4 auf Führungsschienen 5 geführt und mit Hydraulikzylindern 10 betätigbar. Somit entsteht auch zwischen dem ersten Teilpaket 6a und dem zweiten Teilpaket 6b des Plattenpaketes 3 ein Freiraum 9, sodass an zwei Positionen gleichzeitig eine Entleerung der Filterkammern erfolgen kann, beispielsweise indem Filterkammern einzeln geöffnet werden.

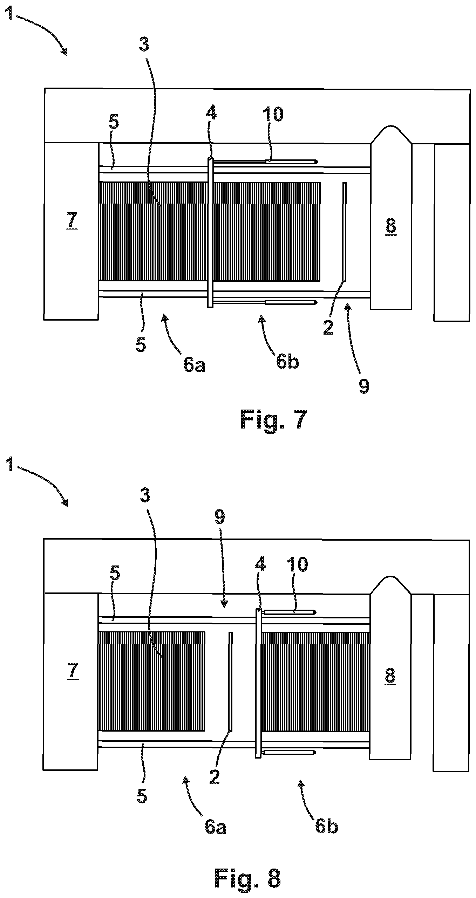

Für Tätigkeiten mit großem Platzbedarf, beispielsweise ein Tauschen von Tüchern, welche Filtermittel bilden, kann die Filterpresse 1 auch mit der erfindungsgemäß vorgesehenen Trenneinrichtung derart betrieben werden, dass das Plattenpaket 3 jeweils nur an einer einzigen Position geöffnet wird. Üblicherweise werden dabei die Filterkammern des Plattenpaketes 3 sequenziell geöffnet und die Schiebeplatte 4 erst dann bewegt, wenn die entsprechende Tätigkeit an sämtlichen mit der Trenneinrichtung vom festen Kopfstück 7 wegbewegbaren Filterkammern abgeschlossen ist. Ein solches sequenzielles Verfahren mit der erfindungsgemäßen Filterpresse 1 ist in Fig. 7 und 8 dargestellt. In dem in Fig. 7 dargestellten Zustand ist eine erste Filterplatte 2 des zweiten Teilpaketes 6b beabstandet von den weiteren Filterplatten 2 des zweiten Teilpaketes 6b und beabstandet von der Druckplatte 8 in einem Freiraum 9 angeordnet, sodass Filtermittel wie Tücher getauscht werden können. Nach Abschluss dieses Tauschens wird die Filterplatte 2 zur Druckplatte 8 bewegt, sodass eine nächste Filterplatte 2 des zweiten Teilpaketes 6b in einen Freiraum 9 zwischen der dann an der Druckplatte 8 befindlichen ersten Filterplatte 2 und den weiteren Filterplatten 2 bewegt werden kann, um auch hier Filtermittel zu tauschen oder sonstige Wartungs- oder Instandhaltungstätigkeiten durchführen zu können.

In weiterer Folge werden die weiteren Filterplatten 2 entsprechend bewegt, in Fig. 7 also von links nach rechts. Sind sämtliche Filterplatten 2 des zweiten Teilpaketes 6b zur Druckplatte 8 bzw. in Fig. 7 nach rechts verfahren, wird auch die Schiebeplatte 4 zum zweiten Teilpaket 6b bewegt, sodass ein Freiraum 9 zwischen der Schiebeplatte 4 und dem ersten Teilpaket 6a gebildet wird. Anschließend werden Filterplatten 2 des ersten Teilpaketes 6a sequenziell zur Schiebeplatte 4 bzw. in Fig. 7 von links nach rechts bewegt, um auch an diesen Filterplatten 2 entsprechende Tätigkeiten durchführen zu können. Ein derartiger Betriebszustand, in welchem eine solche Tätigkeit an einer ersten Filterplatte 2 des ersten Teilpaketes 6a durchgeführt wird, ist schematisch in Fig. 8 dargestellt.

Tätigkeiten, welche einen geringeren Freiraum 9 zwischen den Filterplatten 2 erfordern, wie das Entleeren der Filterkammern oder das Waschen von Filtertüchern, können gleichzeitig am ersten Teilpaket 6a und am zweiten Teilpaket 6b durchgeführt werden, welche durch die Trenneinrichtung voneinander trennbar sind. Hierzu wird die bewegbare Druckplatte 8 vom fixen Kopfstück 7 wegbewegt. Gleichzeitig wird die als Schiebeplatte 4 ausgebildete Trenneinrichtung mit dem zweiten Teilpaket 6b des Plattenpaketes 3 vom fixen Kopfstück 7 wegbewegt. Wenn die Schiebeplatte 4 mit dem zweiten Teilpaket 6b um einen geringeren Abstand als die bewegbare Druckplatte 8 verfahren wird, können Filterplatten 2 sowohl im ersten Teilpaket 6a als auch im zweiten Teilpaket 6b bewegt werden bzw. werden Freiräume sowohl im ersten Teilpaket 6a als auch im zweiten Teilpaket 6b gebildet, um entsprechende Tätigkeiten durchführen zu können.

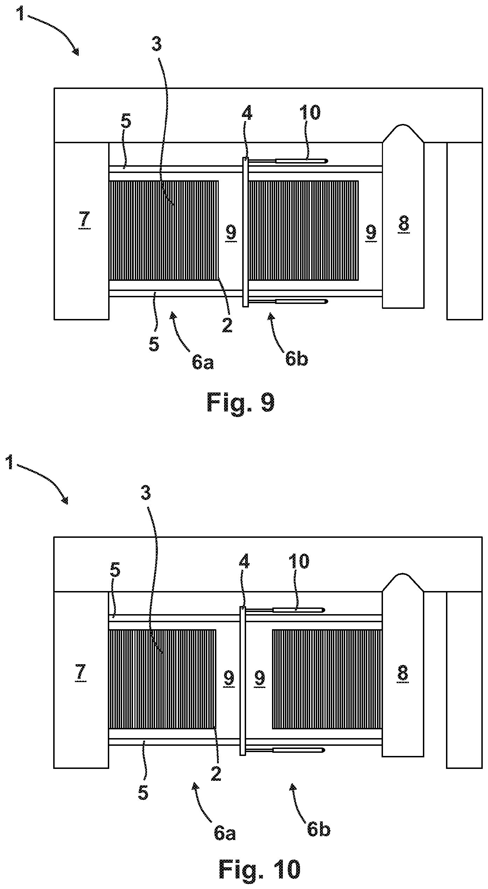

Unterschiedliche Schritte eines derartigen Verfahrens sind in den Fig. 9 bis 11 dargestellt. Wie ersichtlich werden nach Verfahren der Schiebeplatte 4 zunächst Filterplatten 2 des zweiten Teilpaketes 6b sequenziell zur Druckplatte 8 bewegt, wonach Filterplatten 2 des ersten Teilpaketes 6a sequenziell zur Schiebeplatte 4 bewegt werden, sodass Filterkammern sowohl im ersten Teilpaket 6a als auch im zweiten Teilpaket 6b entleert oder Tücher gewaschen werden können.

Um eine besonders hohe Effizienz zu erreichen, können Filterplatten 2 sowohl im ersten Teilpaket 6a als auch im zweiten Teilpaket 6b auch gleichzeitig bewegt werden, sodass ein Entleeren der Filterkammern bzw. ein Waschen wesentlich schneller erfolgt als bei sequenziellem Bewegen der einzelnen Platten.

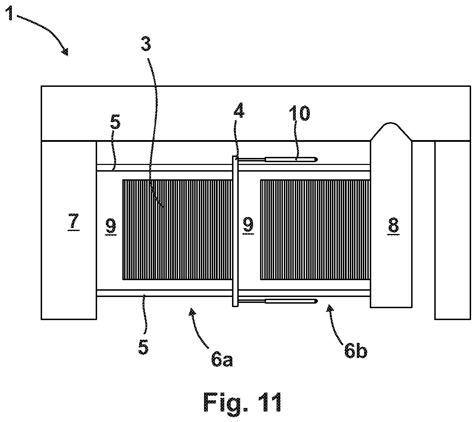

Um die Filterpresse 1 nach dem Entleeren der Filterkammern und Waschen der Tücher wieder in einen Arbeitszustand zum Trennen einer Suspension in feste und flüssige Bestandteile zu bringen, werden die Filterplatten 2 durch Verfahren der beweglichen Druckplatte 8 aus der in Fig. 11 dargestellten Position wieder zusammengepresst, sodass das Plattenpaket 3 dichtend ist.

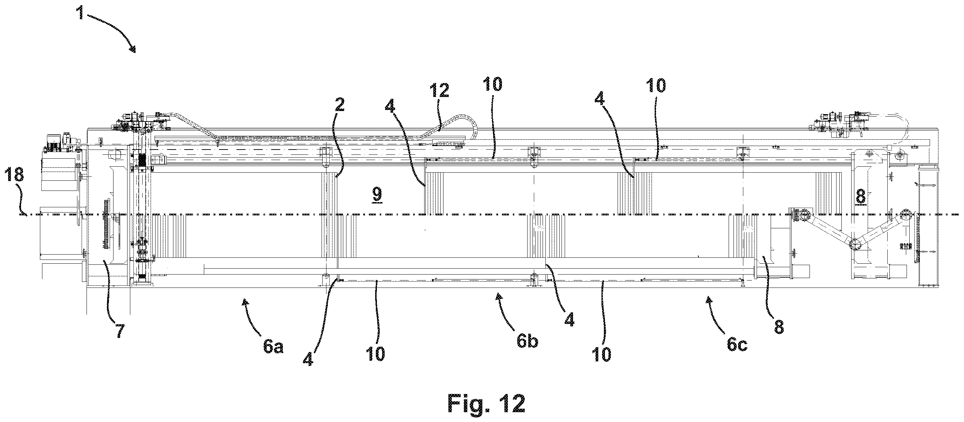

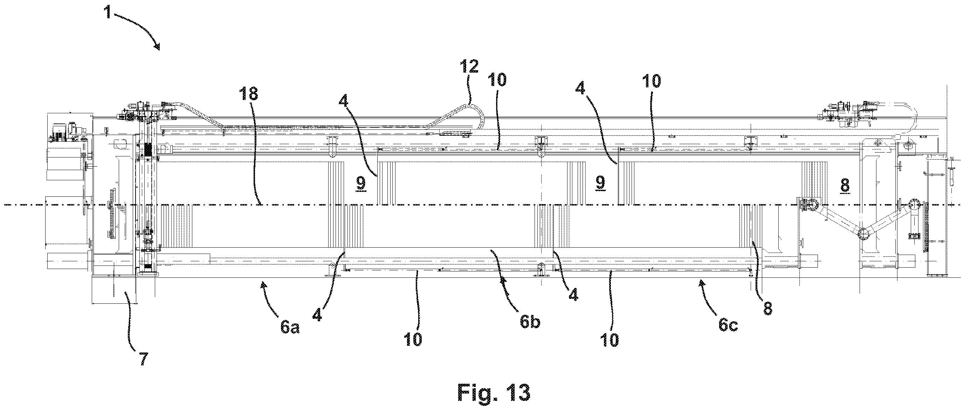

Fig. 12 und 13 zeigen eine weitere erfindungsgemäße Filterpresse 1 in unterschiedlichen Betriebszuständen. Diese Filterpresse 1 weist zwei als Schiebeplatten 4 ausgebildete Trenneinrichtungen auf, welche mit Hydraulikzylindern 10 bewegbar sind, sodass das Plattenpaket 3 in ein erstes Teilpaket 6a, ein zweites Teilpaket 6b und ein drittes Teilpaket 6c geteilt wird. Hier ist auch eine Plattentransportkette 12 dargestellt, mit welcher die Filterplatten 2 üblicherweise bewegt werden. Dabei sind sowohl in Fig. 12 als auch in Fig. 13 jeweils zwei Betriebszustände dargestellt.

Fig. 12 zeigt in einem Bereich unter einer zeichnerischen Teilungsebene 18 die Filterpresse 1 in geschlossenem Zustand, wobei die Hydraulikzylinder 10 bzw. deren Kolbenstangen, mit welchen die Schiebeplatten 4 betätigt werden, vollständig ausgefahren sind und die Druckplatte 8 einen minimalen Abstand vom Kopfstück 7 aufweist, sodass von der Druckplatte 8 ein Druck über die Teilpakete 6a, 6b, 6c bis zum Kopfstück 7 übertragbar ist.

In einem Bereich oberhalb der Teilungsebene 18 ist das Plattenpaket 3 zwischen dem ersten Teilpaket 6a und dem zweiten Teilpaket 6b geöffnet dargestellt. Hierzu sind die oberhalb des zweiten Teilpaketes 6b und des dritten Teilpaketes 6c angeordneten Hydraulikzylinder 10 bzw. deren Kolbenstange um gleich große Beträge eingefahren, sodass die mit diesen Hydraulikzylindern 10 bewegten Schiebeplatten 4 um denselben Betrag vom Kopfstück 7 wegbewegt sind. Es wird somit ein Freiraum 9 zwischen dem ersten Teilpaket 6a und dem zweiten Teilpaket 6b gebildet, um einen Tuchwechsel an dieser Position durchführen zu können.

In Fig. 13 ist die Filterpresse 1 in einem Bereich unter der Teilungsebene 18 analog zu dem unteren Bereich in Fig. 12 in einem geschlossenen Zustand dargestellt. In einem Bereich oberhalb der Teilungsebene 18 ist das Plattenpaket 3 in dem in Fig. 13 dargestellten Betriebszustand zwischen dem ersten Teilpaket 6a und dem zweiten Teilpaket 6b sowie zwischen dem zweiten Teilpaket 6b und dem dritten Teilpaket 6c geöffnet dargestellt. Hierzu sind die oberhalb des zweiten Teilpaketes 6b und des dritten Teilpaketes 6c angeordneten Hydraulikzylinder 10 bzw. deren Kolbenstangen teilweise eingefahren, wobei die Kolbenstange des über dem dritten Teilpaket 6c angeordneten Hydraulikzylinders 10 weiter eingefahren ist als die des über dem zweiten Teilpaket 6b angeordneten Hydraulikzylinders 10. Die Schiebeplatten 4 werden somit durch die Hydraulikzylinder 10 unterschiedlich weit vom Kopfstück 7 wegbewegt, sodass sowohl ein Freiraum 9 zwischen dem ersten Teilpaket 6a und dem zweiten Teilpaket 6b als auch zwischen dem zweiten Teilpaket 6b und dem dritten Teilpaket 6c gebildet wird, um Filterkuchen an mehreren Positionen gleichzeitig austragen zu können.

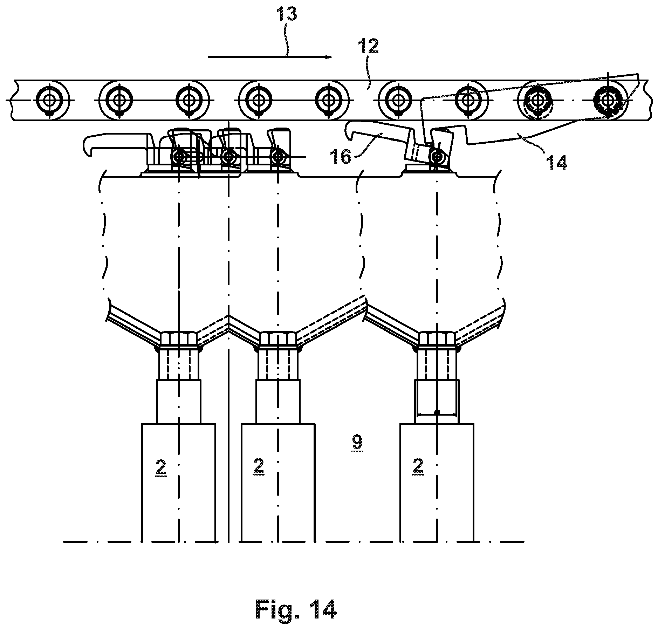

Fig. 14 zeigt einen oberen Bereich der Filterplatten 2 samt der Plattentransportkette 12 im Detail. Dargestellt ist ein Zustand einer herkömmlichen Entleerung einer Filterkammer, indem eine Filterplatte 2 an einer Klinke 16 mit einem Mitnehmer 14, welcher drehbar mit der Plattentransportkette 12 verbunden ist, von der Plattentransportkette 12 entlang einer Transportrichtung 13 derselben bewegt und somit von den weiteren Filterplatten 2 entfernt wird. Dadurch entsteht zwischen den Filterplatten 2 ein Freiraum 9, um beispielsweise einen zwischen den Filterplatten 2 befindlichen Filterkuchen auszutragen. Wie ersichtlich ist es somit bei einer derartigen Filterpresse 1 grundsätzlich nur möglich, einzelne Filterplatten 2 von den weiteren Filterplatten 2 entlang der Transportrichtung 13 wegzuziehen, indem die Klinke 16 angehoben und ein Formschluss zwischen den Filterplatten 2 gelöst wird.

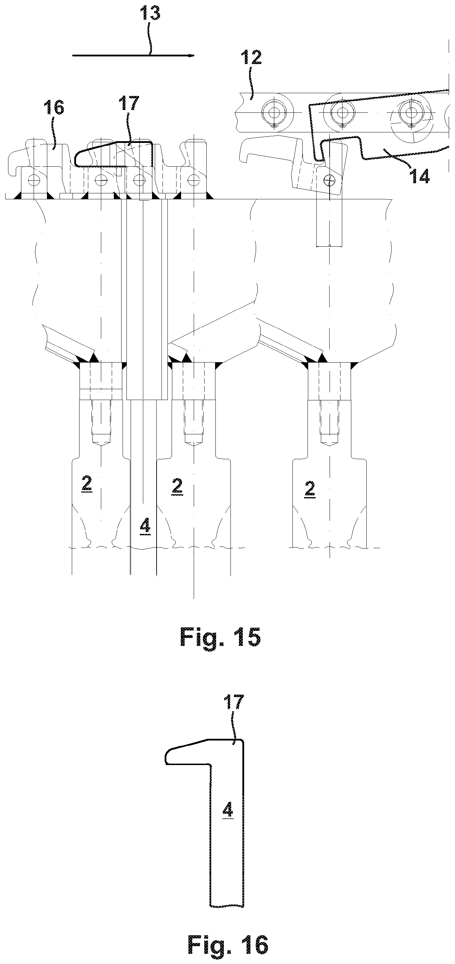

Um mehrere Filterplatten 2 erfindungsgemäß mit der Schiebeplatte 4 von den weiteren Filterplatten 2 wegschieben zu können, weist die Schiebeplatte 4 eine Sonderklinke 17 auf, welche nicht in die vorgelagerte Filterplatte 2 eingreift, sodass bei einem Betätigen der Schiebeplatte 4 die der Schiebeplatte 4 in Transportrichtung 13 vorgelagerten Filterplatten 2 mit der Schiebeplatte 4 bewegbar sind, jedoch die der Schiebeplatte 4 in Transportrichtung 13 nachgelagerten Filterplatten 2 nicht mitbewegt werden. Ein Detail des Plattenpaketes 3 samt der Schiebeplatte 4 ist in Fig. 15 dargestellt. In Fig. 16 ist die Sonderklinke 17 im Detail dargestellt, welche mit der Schiebeplatte 4 verbunden ist.

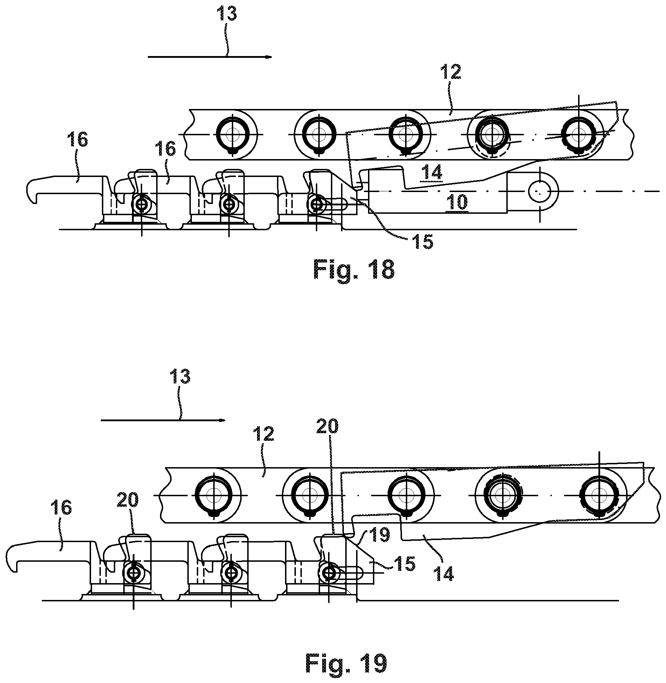

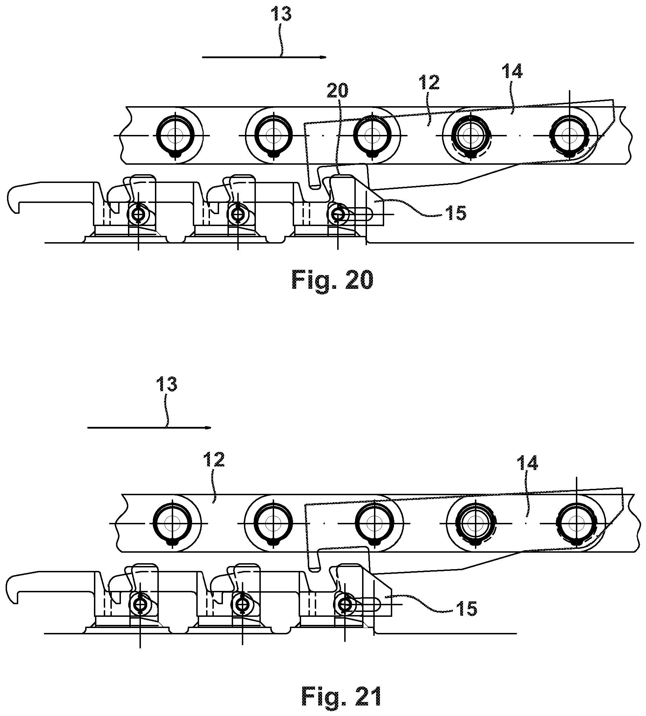

Um zu verhindern, dass der Mitnehmer 14 der stillstehenden Plattentransportkette 12 eine mit der Schiebeplatte 4 bewirkte Bewegung der Filterplatten 2 behindert, ist an der jeweils ersten Filterplatte 2 des zweiten Teilpaketes 6b und des dritten Teilpaketes 6c eine Hebekufe 15 angeordnet, welche endseitig eine schräge Fläche 19 aufweist und mit einem Hydraulikzylinder 10 betätigbar ist, sodass der Mitnehmer 14 auf eine Höhe einer Oberkante eines Lagerbockes 20 angehoben wird, in welchem die Klinke 16 drehbar gelagert ist, sodass die mit der Schiebeplatte 4 bewegten Filterplatten 2 unter dem Mitnehmer 14 hindurch bewegt werden können und der Mitnehmer 14 auf den Filterplatten 2 gleitet. Andernfalls würde der Mitnehmer 14 eine Bewegung der Filterplatten 2 am Lagerbock 20 blockieren. Entsprechende Betriebszustände sind in den Fig. 18 bis 21 dargestellt. Wie ersichtlich wird der Mitnehmer 14 durch die Hebekufe 15 bei einer Bewegung derselben in Transportrichtung 13 und gleichzeitig stehendem Mitnehmer 14 angehoben und dadurch auf den Lagerbock 20 gehoben, sodass der Mitnehmer 14 die Bewegung der Filterplatten 2 nicht blockiert.

Eine erfindungsgemäße Filterpresse 1 ermöglicht ein wesentlich effizienteres Verfahren, weil Filterkammern nicht einzeln entleert werden müssen, sondern ein gleichzeitiges Entleeren mehrerer Filterkammern möglich ist. Dadurch wird die Zeit reduziert, in welcher die Filterpresse 1 nicht zum Trennen von festen und flüssigen Bestandteilen einer Suspension genutzt werden kann. Durch den erfindungsgemäßen Einsatz von Trenneinrichtungen wird dies auf besonders effiziente und gleichzeitig robuste Weise gewährleistet.

## Patentansprüche

1. Filterpresse (1), aufweisend ein mehrere Filterplatten (2) aufweisendes Plattenpaket (3) mit zwischen den Filterplatten (2) angeordneten Filterkammern, wobei die Filterplatten (2) relativ zueinander verschiebbar zwischen einem fixem Kopfstück (7) und einer beweglichen Druckplatte (8) positioniert sind, um die Filterkammern bei Bedarf entleeren zu können, **dadurch gekennzeichnet, dass** zumindest eine Trenneinrichtung vorgesehen ist, mit welcher ein Teilpaket (6a, 6b, 6c) des Plattenpaketes (3) relativ zu einem weiteren Teilpaket (6a, 6b, 6c) des Plattenpaketes (3) verschiebbar ist, um in den einzelnen Teilpakten (6a, 6b, 6c) ein gleichzeitiges Entleeren von Filterkammern und/oder gleichzeitiges Tauschen von Filtermitteln zu ermöglichen, und wobei eine Plattentransportkette (12) vorgesehen ist, um die Filterplatten (2) entlang einer vom Kopfstück (7) zur Druckplatte (8) orientierten Transportrichtung (13) zu bewegen, sodass das jeweilige Teilpaket (6a, 6b, 6c) mittels der Plattentransportkette (12) entleerbar ist, indem die einzelnen Filterplatten (2) sequenziell vom Kopfstück (7) weg bewegt werden, wobei zwischen den Filterplatten (2) Freiräume gebildet werden, sodass in den Filterkammern befindlicher Filterkuchen durch die Schwerkraft ausgetragen wird, wobei ein mit der Plattentransportkette (12) bewegbar verbundener Mitnehmer (14) vorgesehen ist, welcher formschlüssig mit den Filterplatten (2) verbindbar ist, um die Plattentransportkette (12) lösbar mit den Filterplatten (2) zu verbinden.

2. Filterpresse (1) nach Anspruch 1, **dadurch gekennzeichnet, dass** die Trenneinrichtung als Schiebeplatte (4) ausgebildet ist.

3. Filterpresse (1) nach Anspruch 2, **dadurch gekennzeichnet, dass** die Schiebeplatte (4) hydraulisch bewegbar ist.

4. Filterpresse (1) nach einem der Ansprüche 1 bis 3, **dadurch gekennzeichnet, dass** zumindest zwei Trenneinrichtungen vorgesehen sind, um das Plattenpaket (3) in zumindest drei Teilpakete (6a, 6b, 6c) zu teilen.

5. Filterpresse (1) nach einem der Ansprüche 1 bis 4, **dadurch gekennzeichnet, dass** mehrere Filterkammern eines Teilpaketes (6a, 6b, 6c) des Plattenpaketes (3) gleichzeitig entleerbar sind.

6. Filterpresse (1) nach einem der Ansprüche 1 bis 5, **dadurch gekennzeichnet, dass** Führungseinrichtungen vorgesehen sind, an welchen die zumindest eine Trenneinrichtung und/oder die Filterplatten (2) verschiebbar gelagert sind.

7. Filterpresse (1) nach einem der Ansprüche 1 bis 6, **dadurch gekennzeichnet, dass** eine Filterplatte (2), insbesondere eine erste Filterplatte (2) eines Teilpaketes (6a, 6b, 6c), eine Hebekufe (15) aufweist, mit welcher der Mitnehmer (14) betätigbar, insbesondere anhebbar, ist, sodass eine mit der Trenneinrichtung bewirkte Bewegung des Teilpaketes (6a, 6b, 6c) relativ zum Mitnehmer (14) in Transportrichtung (13) nicht durch den Mitnehmer (14) blockiert wird.

8. Filterpresse (1) nach einem der Ansprüche 1 bis 7, **dadurch gekennzeichnet, dass** zumindest einige Filterplatten (2) über bewegbare Klinken (16) formschlüssig verbindbar sind.

9. Filterpresse (1) nach Anspruch 8, **dadurch gekennzeichnet, dass** die zumindest eine Trenneinrichtung eine Sonderklinke (17) aufweist, sodass bei einer Bewegung der Trenneinrichtung in Transportrichtung (13) Filterplatten (2), welche in Transportrichtung (13) der Trenneinrichtung nachgelagert sind, nicht mit der Trenneinrichtung bewegt werden.

10. Verfahren zum Betreiben einer Filterpresse (1) mit einem mehrere Filterplatten (2) aufweisenden Plattenpaket (3) mit zwischen den Filterplatten (2) angeordneten Filterkammern nach einem der Ansprüche 1 bis 9, wobei das Plattenpaket (3) mit einer Trenneinrichtung in zumindest zwei Teilpakete (6a, 6b, 6c) geteilt wird, wonach zumindest zwei in unterschiedlichen Teilpaketen (6a, 6b, 6c) angeordnete Filterkammern gleichzeitig geöffnet werden.

11. Verfahren nach Anspruch 10, **dadurch gekennzeichnet, dass** mehrere Filterkammern eines Teilpaketes (6a, 6b, 6c) gleichzeitig geöffnet werden.

## Claims

1. A filter press (1), comprising a plate pack (3) comprising a plurality of filter plates with filter chambers arranged between the filter plates (2), wherein the filter plates (2) are positioned displaceably relative to one another between a fixed head piece (7) and a mobile printing plate (8), in order to be able to empty the filter chambers when required, **characterised in that** at least one separating device is provided, with which a partial pack (6a, 6b, 6c) of the plate pack (3) is displaceable relative to a further partial pack (6a, 6b, 6c) of the plate pack (3), in order to enable simultaneous emptying of filter chambers and/or simultaneous exchange of filter means in the individual partial packs (6a, 6b, 6c), and wherein a plate transport chain (12) is provided in order to move the filter plates (2) along a transport direction (13) orientated from the head piece (7) to the printing plate (8), so that the respective partial pack (6a, 6b, 6c) can be emptied by means of the plate transport chain (12), whereby the individual filter plates (2) are moved sequentially away from the head piece (7), wherein free spaces are formed between the filter plates (2), so that a filter cake present in the filter chambers is discharged by the force of gravity, and wherein a driver (14) connected movably to the plate transport chain (12) is provided, which can be connected a form-fit manner to the filter plates (2) in order to connect the plate transport chain (12) detachably to the filter plates (2).

2. The filter press (1) according to claim 1, **characterised in that** the separating device is constituted as a slide plate (4).

3. The filter press (1) according to claim 2, **characterised in that** the slide plate (4) can be moved hydraulically.

4. The filter press (1) according to any one of claims 1 to 3, **characterised in that** at least two separating devices are provided, in order to separate the plate pack (3) into at least three partial packs (6a, 6b, 6c) .

5. The filter press (1) according to any one of claims 1 to 4, **characterised in that** a plurality of filter chambers of a partial pack (6a, 6b, 6c) of the plate pack (3) can be emptied simultaneously.

6. The filter press (1) according to any one of claims 1 to 5, **characterised in that** guide devices are provided, on which the at least one separating device and/or the filter plates (2) are mounted displaceably.

7. The filter press (1) according to any one of claims 1 to 6, **characterised in that** a filter plate (2), in particular a first filter plate (2) of a partial pack (6a, 6b, 6c), comprises a lifting skid (15), with which the driver (14) can be actuated, in particular can be raised, so that a movement of the partial pack (6a, 6b, 6c) brought about with the separating device relative to the driver (14) is not blocked by the driver (14) in the transport direction (13).

8. The filter press (1) according to any one of claims 1 to 7, **characterised in that** at least some filter plates (2) can be connected in a formfitting-manner via movable latches (16).

9. The filter press (1) according to claim 8, **characterised in that** the at least one separating device comprises a special latch (17), so that filter plates (2) which are downstream in the transport direction (13) of the separating device are not moved with the separating device when there is a movement of the separating device in the transport direction (13).

10. A method for operating a filter press (1) with a plate pack (3) comprising a plurality of filter plates (2) with filter chambers arranged between the filter plates (2) according to any one of claims 1 to 9, wherein the plate pack (3) is separated with a separating device into at a least two partial packs (6a, 6b, 6c), after which at least two filter chambers arranged in different partial packs (6a, 6b, 6c) are simultaneously opened.

11. The method according to claim 10, **characterised in that** a plurality of filter chambers of a partial pack (6a, 6b, 6c) are opened simultaneously.

## Revendications

1. Filtre-presse (1) comportant un ensemble de plateaux (3) comportant plusieurs plateaux de filtration (2) avec des chambres de filtration disposées entre les plateaux de filtration (2), sachant que les plateaux de filtration (2) sont positionnés déplaçables les uns par rapport aux autres entre un élément de tête fixe (7) et un plateau de compression mobile (8) pour pouvoir vider les chambres de filtration en cas de besoin, **caractérisé en ce qu'**au moins un dispositif de séparation est prévu avec lequel une partie d'ensemble (6a, 6b, 6c) de l'ensemble de plateaux (3) peut être déplacée par rapport à une autre partie d'ensemble (6a, 6b, 6c) de l'ensemble de plateaux (3) pour permettre un vidage simultané des chambres de filtration dans les parties d'ensemble individuelles (6a, 6b, 6c) et/ou un échange simultané des moyens de filtration et sachant qu'une chaîne de transport de plateaux (12) est prévue pour déplacer les plateaux de filtration (2) le long d'un dispositif de transport (13) orienté depuis un élément de tête (7) vers un plateau de compression (8) de telle manière que la partie d'ensemble concernée (6a, 6b, 6c) peut être vidée au moyen de la chaîne de transport de plateaux (12), les plateaux de filtration (2) individuels étant éloignés de façon séquentielle de l'élément de tête (7), sachant que des espaces libres sont formés entre les plateaux de filtration (2) de telle manière que le gâteau de filtration se trouvant dans les chambres de filtration est extrait par la gravité, sachant qu'un élément d'entraînement (14) relié de façon mobile à la chaîne de transport de plateaux (12) est prévu, lequel peut être relié par conformité de forme aux plateaux de filtration (2) pour relier la chaîne de transport de plateaux (12) de façon amovible aux plateaux de filtration (2).

2. Filtre-presse (1) selon la revendication 1, **caractérisé en ce que** le dispositif de séparation est constitué sous la forme d'un plateau coulissant (4).

3. Filtre-presse (1) selon la revendication 2, **caractérisé en ce que** le plateau coulissant (4) peut être déplacé de façon hydraulique.

4. Filtre-presse (1) selon l'une quelconque des revendications 1 à 3, **caractérisé en ce qu'**au moins deux dispositifs de séparation sont prévus pour partager l'ensemble de plateaux (3) en au moins trois parties d'ensemble (6a, 6b, 6c).

5. Filtre-presse (1) selon l'une quelconque des revendications 1 à 4, **caractérisé en ce que** plusieurs chambres de filtration d'une partie d'ensemble (6a, 6b, 6c) de l'ensemble de plateaux (3) peuvent être vidées simultanément.

6. Filtre-presse (1) selon l'une quelconque des revendications 1 à 5, **caractérisé en ce que** des dispositifs de guidage sont prévus sur lesquels sont logés de façon mobile au moins un dispositif de séparation et/ou les plateaux de filtration (2).

7. Filtre-presse selon l'une quelconque des revendications 1 à 6, **caractérisé en ce qu'**un plateau de filtration (2), en particulier un premier plateau de filtration (2) d'une partie d'ensemble (6a, 6b, 6c) comporte un patin élévateur (15), avec lequel l'élément d'entraînement (14) peut être actionné, en particulier relevé de telle manière qu'un mouvement causé avec le dispositif de séparation de la partie d'ensemble (6a, 6b, 6c) par rapport à l'élément d'entraînement (14) n'est pas bloqué par l'élément d'entraînement (14) dans la direction de transport (13).

8. Filtre-presse (1) selon l'une quelconque des revendications 1 à 7, **caractérisé en ce qu'**au moins plusieurs plateaux de filtration (2) peuvent être reliés par conformité de forme par le biais de loquets mobiles (16).

9. Filtre-presse (1) selon la revendication 8, **caractérisé en ce qu'**au moins un dispositif de séparation comporte un loquet spécial (17) de telle manière que lors d'un mouvement du dispositif de séparation dans la direction de transport (13), les plateaux de filtration (2), qui sont logés dans la direction de transport (13) en aval du dispositif de séparation, ne sont pas déplacés avec le dispositif de séparation.

10. Procédé destiné à faire fonctionner un filtre-presse (1) avec un ensemble de plateaux (3) comportant plusieurs plateaux de filtration (2) avec des chambres de filtration disposées entre les plateaux de filtration (2) selon l'une quelconque des revendications 1 à 9, sachant que l'ensemble de plateaux (3) est partagé avec un dispositif de séparation en au moins deux parties d'ensemble (6a, 6b, 6c), selon lequel au moins deux chambres de filtration disposées dans des parties d'ensemble (6a, 6b, 6c) différentes sont ouvertes simultanément.

11. Procédé selon la revendication 10, **caractérisé en ce que** plusieurs chambres de filtration d'une partie d'ensemble (6a, 6b, 6c) sont ouvertes simultanément.
